# EUROPEAN PATENT SPECIFICATION

(11) **EP 2 475 624 B1**
(45) Date of publication and mention of the grant of the patent: **19.08.2015**
(21) Application number: 10734807.0
(22) Date of filing: 11.06.2010
(51) Int. Cl.: C02F 3/04, C02F 3/10, C02F 3/22, C02F 3/32, C02F 103/00, C02F 1/28, C02F 1/44

(54) **APPARATUS AND METHOD FOR DISPOSAL AND TREATMENT OF WASTE WATER, SEWAGE AND/OR EFFLUENT**
VORRICHTUNG UND VERFAHREN FÜR DIE ENTSORGUNG UND AUFBEREITUNG VON ABWASSER, KANALWASSER UND/ODER SCHMUTZWASSER
APPAREIL ET PROCÉDÉ D'ÉLIMINATION ET DE TRAITEMENT D'EAUX USÉES, D'EAUX D'ÉGOUTS ET/OU D'EFFLUENTS

(30) Priority: 20.06.2009 GB 0910685
(43) Date of publication of application: 18.07.2012
(73) Proprietor: Webb, Colin Gavin Edward, Selby, North Yorkshire YO8 6PX (GB)
(72) Inventor: Webb, Colin Gavin Edward, Selby, North Yorkshire YO8 6PX (GB)
(74) Representative: Tomkinson, Alexandra
(86) International application number: PCT/GB2010/050979
(87) International publication number: WO 2010/146386

(56) References cited:
- WO-A1-00/01470
- WO-A1-01/10787
- WO-A1-96/31437
- WO-A1-99/01385
- WO-A1-2005/033018
- WO-A2-2006/005118
- FR-A1- 2 856 396
- NL-C2- 1 018 703
- US-A- 6 132 599

## Description

This invention relates to apparatus and a method for the disposal and treatment of waste water, sewage and/or effluent.

Many households or businesses are not connected to a mains sewage system, particularly in more rural parts of a country, and therefore have to rely on small scale sewage treatment apparatus provided in the locality of the building or house. An example of small scale sewage treatment apparatus is a septic tank which relies on the development of a bacterial environment within the tank to decompose or mineralise sewage waste discharged into the tank. Such tanks typically have to be maintained by periodic removal of non-decomposed solids which gradually build up and fill the tank. This can be a time consuming, unpleasant and expensive process. With existing aerobic treatment plants, the conditions within apparatus can become too anaerobic and the bacterial environment can stop functioning efficiently, which may result in bio-mass being formed or death of the active bacteria contained within the treatment plant which impairs efficiency of the apparatus. Furthermore, most conventional aerobic sewage treatment plants require electricity to power motors or other machinery in order to introduce oxygen into the system.

In order to overcome the abovementioned problems, there is a move to provide more efficient sewage treatment apparatus which require little or no electricity or maintenance. For example, US5976374 discloses a self cleansing filter system which comprises a ventilated bed of discrete filtration material in which is dispersed an aggregation of living organisms. The organisms maintain at least a surface layer of the bed in an open and aerobic state.

A further example of a self cleaning filter system is disclosed in WO01/90007 wherein a biolytic filtration system is provided in a three dimensional humus structural framework or matrix lattice. The structural support framework is formed from a plurality of discrete but interconnected matrix bed elements provided in a container or free-standing. The bed elements include inert solid materials, such as segments of plastic tubing, and humus container in mesh bags, plastic crates and/or the like. Thus, the humus is supported on and provided within the three dimensional structural framework.

WO01/77033 discloses a biofiltering system comprising a bottomless ventilated housing with a bed of peat overlying an effluent absorption area consisting of a layer of crushed gravel on the ground. The peat can be located on multi-layered membranes of non-woven fibres. Open ended upright aeration conduits are provided to aerate the peat and an intermediate portion extends horizontally within the bed of peat between the lower ends of the aeration conduits. The intermediate portion has a plurality of aeration orifices spaced therealong to discharge air into the peat. A similar bioltering system is disclosed in WO01/77032.

Other exemplary prior art documents are WO 2006/005118, WO 99101385, WO 01/77033, WO 01/10787, WO 2005/033018.

It is an aim of the present invention to provide filtration apparatus for the treatment of waste water, sewage and/or effluent.

It is a further aim of the present invention to provide a method of using filtration apparatus for the treatment of waste water, sewage and/or effluent.

It is a further aim of the present invention to provide a method of construction of filtration apparatus for the treatment of waste water, sewage and/or effluent.

According to a first aspect of the present invention there is provided filtration apparatus for the treatment of waste water, sewage and/or effluent, said apparatus including a housing having at least a first filter layer provided therein, said first filter layer comprising biological filtration means including one or more organisms and a substrate material to filter waste water, sewage and/or effluent located thereon, passing thereover or therethrough in use, said apparatus including at least a second filter layer for filtering fluid that has passed through the at least first filter layer, said second filter layer includes a fluid absorbent material that is different to the substrate material of the at least first filter layer, characterised in that the housing also includes air inlet means and air outlet means to allow the flow of air through said apparatus in use, the air inlet means and air outlet means each including at least one upright channel or pipe having at least a first opening defined therein to allow atmospheric air to enter or exit the channel or pipe and at least a second opening defined therein to allow said atmospheric air to flow into the filtration housing or allow air to flow out of said filtration housing respectively, said air inlet means and said air outlet means arranged a spaced distance apart in the apparatus to provide a chimney effect, the substrate material of the at least first filter layer is an organic material and includes humus and one or more worms, and the fluid absorbent material of the at least second filter layer is an inorganic material with substantially no humus or worms.

Thus, the present invention includes at least two different filter layers and each of said filter layers performs a different function in treating the waste water, sewage and/or effluent. The apparatus of the present invention does not require any chemicals to be used in normal use and does not normally require the pumping of air through the system. In addition, the filtration system is self cleaning, thereby requiring little or no maintenance.

The present invention has the advantage over prior art devices, such as WO01/77033, in that the fluid absorbent material of the at least second lower filter layer in the present invention is preferably inherently fluid absorbent (i.e. the material absorbs water within the physical structure of each fibre, grain, particle and/or the like of material). The gravel forming the effluent absorption area in WO01/77033 is not inherently absorbent since it merely allows waste water to flow between the gravel particles and not within the gravel particles. Thus, the filtering effect provided by the fluid absorbent material of the present invention is far more efficient and refined than the gravel layer disclosed in WO01/77033. Furthermore, the solid matter in WO01/77033 is separated out in a septic tank before entering the filtration system. It is not necessary to have a separate septic tank in the present invention since the arrangement of the layers in the present invention allows both solids and liquids to be separated using the filter layers within the same apparatus housing.

The first filter layer predominantly treats solid and liquid matter contained in the waste water, sewage and/or effluent. The second filter layer predominantly treats liquid matter that has already passed through the first filter.layer. The solid matter is typically retained on the first filter layer to be broken down by the one or more organisms. As such, the second filter layer provides a finer filtering means to that of the first filter layer. Further preferably the fluid absorbent material makes up a major or whole part of said at least second filter layer.

Preferably the fluid absorbent material is capable of absorbing at least 20% of its own weight in water.

In one embodiment the fluid absorbent material is a foamed material. For example, a sponge material or an open cell foam material could be used.

In one embodiment the fluid absorbent material is a fibre product, such as mineral wool.

The at least second filter layer can contain bacteria but typically no worms or other movable multi-cellular organisms are contained in said at least second filter layer. The at least first filter layer typically contains bacteria, fungi, worms and/or other multi-cellular organisms.

In one embodiment both the at least first and second filter layers are contained in a single housing with the at least first filter layer arranged above the at least second filter layer: In this arrangement, fluid being treated passes through the at least first upper filter layer before moving under gravity to the at least second lower filter layer.

Preferably the at least first upper filter layer is arranged vertically above and further preferably in substantial vertical alignment with the at least second lower filter layer.

In an alternative embodiment the at least first filter layer and the at least second filter layer are arranged laterally or in separate housings to each other and fluid passing from the at least first filter layer is then moved via movement means, such as for example via a pump, to the at least second filter layer. The laterally arranged layers can be contained in a single housing or separate housings.

In either embodiment, preferably partially treated fluid, waste water, sewage and/or effluent enters each of the at least first and second filter layers from an upper surface thereof and passes out through a lower surface thereof.

The housing also includes air inlet means and air outlet means to allow the flow of air through said apparatus in use. Thus, the filtration apparatus of the present invention uses at least two different filter means in combination with an air venting system to allow air to be naturally drawn through the apparatus to aerate the system in use, thereby promoting the environment for biological breakdown of any waste water, sewage and/or effluent contained in the apparatus through entirely natural and/or biological processes and does not require assisted, electrical and/or mechanical air flow means. It is to be noted that assisted, powered or man-made air flow or mechanical air venting means could be employed if required, such as a fan and/or the like. In one embodiment assisted or powered air flow means could be used when a requirement for increased air flow is detected in the apparatus, such as by sensing means and/or the like.

The air inlet means and air outlet means are arranged to provide a chimney effect in the filtration apparatus Air is drawn through the apparatus substantially continuously to ventilate the filter layer(s). This is due, at least in part, as a result of the heat generated from the natural biological breakdown of effluent, sewage and/or waste water in the filtration apparatus, this further increases the drawing of air through the air inlet means and out through the air outlet means. It works on the principle that warmer air is less dense than ambient or cooler air, thereby causing lower pressure at the base of the air inlet means or base of the filtration housing. The higher pressure of the ambient or cooler air pushes air into the air inlet means and through the housing. This in turn pushes air through the air outlet means to vent the same to atmosphere. The temperature in the air inlet means and air outlet means is also typically warmer than the ambient exterior temperature and warmer air rises and cooler air falls. The air inlet means and air outlet means could be heated, either using powered means or naturally using sunlight to create the required temperature difference in the apparatus. Sensing means could be provided to detect a temperature change and micro-processing means could be used to communicate with the air flow or temperature sensing means. Anabatic and kanabatic winds may also play a role in the air movement depending on the location of the filtration apparatus in use.

The air inlet means typically includes at least one or a first upright, and preferably substantially vertical, air inlet channel or pipe. The air inlet channel or pipe has at least one opening to allow atmospheric air to enter the same. This opening can be provided below, adjacent or above ground level. However, in a preferred embodiment the opening to the air inlet channel or pipe is provided at least a pre-determined distance above ground level to ensure dirt, debris, soil, ground water run-off and/or the like does not enter said pipe to cause flooding of the filtration apparatus.

Preferably at least one further or second air inlet opening is provided in said air inlet means and is arranged to allow communication with the interior of the filtration housing. In one embodiment the at least one further air inlet opening is provided substantially transversally to the longitudinal axis of the air inlet pipe or channel (i.e. the central axis of the opening is transverse to the longitudinal axis of the air inlet means). This allows air, on entering the filtration housing, to flow substantially perpendicular to the air inlet channel or pipe.

In one embodiment the at least one further air inlet opening is provided adjacent or above at least one of said filter layers contained in said housing, thereby allowing air to flow over the upper surface of said filter layer to aerate the biological filtration means.

In one embodiment a plurality of said filter layers are provided in said housing and said air inlet means includes a plurality of further air inlet openings to allow each filter layer or two or more filter layers to have an air vent or air opening associated therewith. Thus, in one embodiment there is provided a single air inlet pipe or channel with a plurality, of further air inlet openings defined therein. Each further air inlet opening is preferably arranged a spaced distance apart along the longitudinal axis of the inlet pipe or channel and a spaced distance from the first atmosphere air inlet opening. Alternatively, a separate air inlet pipe or channel can be provided in association with each filter layer or two or more filter layers of the apparatus. Each separate air inlet pipe or channel can include a first inlet opening and at least a second inlet opening.

The air outlet means typically includes at least one upright, and preferably substantially vertical, air outlet channel or pipe. The air outlet channel or pipe has at least one or a first opening to allow air from the filtration apparatus to vent to atmosphere. This opening can be provided below, adjacent or above ground level. However, in a preferred embodiment the opening to the air outlet channel or pipe is provided at least a pre-determined distance above ground level to ensure dirt, debris, soil, ground water run-off and/or the like does not enter said pipe to cause flooding of the filtration apparatus.

It will be appreciated that any combination or number of one or more air inlets and/or air outlets can be associated with a particular filter layer within the apparatus. For example, each filter layer or a filter layer may contain two air outlets and one air inlet and vice versa.

Cover means can be provided over or associated with the first opening or openings to said air inlet and/or air outlet means to prevent rain water, snow, debris and/or the like from entering said means and blocking the same whilst not interfering with the air flow. For example, a grille, filter, apertured cover and/or the like could be used.

At least one further or second outlet opening is provided in said air outlet means and is arranged to allow communication with the interior of the filtration housing. This allows air contained in the filtration housing to be vented to atmosphere. In one embodiment the at least one further air outlet opening is provided substantially transversally to the longitudinal axis of the air outlet pipe or channel (i.e. the central axis of the opening is transverse to the longitudinal axis of the air outlet means). This allows air that has flowed across a filter layer in the filtration housing to flow through substantially 90 degrees to flow into the main upright air outlet pipe or channel.

The further air outlet opening or further air inlet opening is typically provided at an opposite end or spaced distance apart from the first air outlet opening or the first air inlet opening to atmosphere respectively.

Preferably the at least one further air outlet opening is provided adjacent or above the at least one filter layer contained in said housing, thereby allowing air that has flowed over the upper surface of the filter layer to be vented from the apparatus or to flow over another filter layer in the apparatus.

In one embodiment a plurality of filter layers are provided in said housing and said air outlet means includes a plurality of further air outlet openings to allow each filter layer or two or more filter layers to have an air vent or air opening associated therewith. Thus, in one embodiment there is provided a single air outlet pipe or channel with a plurality of further air outlet openings defined therein. Each further air outlet opening is preferably arranged a spaced distance apart along the longitudinal axis of the air outlet pipe or channel and a spaced distance from the main atmosphere air outlet opening.

In an alternative embodiment there is provided a separate air outlet pipe or channel associated with each filter layer or two or more filter layers of the housing.

Preferably the further or second air inlet openings into the housing and the further or second air outlet openings from the housing are provided a spaced distance apart and further preferably are diametrically opposed, substantially aligned and/or provided on opposite side walls of the housing. This allows the greatest distance between an air inlet opening and air outlet opening associated with a particular filter layer, thereby providing flow of air over substantially the entire length or width of the filter layer.

Preferably a further air inlet opening and further air outlet opening associated with a particular filter layer are provided at a similar vertical height in the housing. Alternatively the further inlet and .outlet openings could be provided at different heights relative to the filter layer.

In one embodiment the air inlet means typically includes at least one or a first upright, and preferably substantially vertical, air inlet channel or pipe with at least one opening to allow atmospheric air to enter the same, as previously described. Preferably the at least one further or second air inlet opening provided in said air inlet means is arranged at or adjacent a base in the interior of the filtration housing and/or at, adjacent or above a lowest filter layer in the filtration housing.

Preferably intermediate air flow means are provided in the filtration housing to allow air to flow from the base of the filtration housing or lowest filter layer through one or more upper filter layers prior to exiting from air outlet means. Preferably the intermediate air flow means are arranged so that air flows from a lower filter layer to the next adjacent upper filter layer.

Preferably an air inlet opening of the intermediate air flow means is provided a spaced distance apart from, and preferably on an opposite side of the filtration housing, from the second air inlet opening of the main air inlet means. This allows air to flow across or through a filter layer prior to flowing to a higher filter layer.

Preferably the intermediate air flow means is an upright, and preferably substantially vertical, channel or pipe. One or more air outlet openings can be defined in the intermediate air flow means.

Preferably the one or more air outlet openings of the intermediate air flow means are provided adjacent an upper filter layer relative to the filter layer from which air entered the intermediate air flow means. Air typically travels through an inlet at or adjacent the base of the intermediate air flow means and out through an outlet at or adjacent a top of the intermediate air flow means.

The air outlet opening of a first intermediate air flow means is typically a spaced distance apart, and preferably opposite, to the air inlet opening of a further intermediate air flow means associated with the same filter layer.

Thus, in this embodiment air flows from the base of the filtration housing up through the filter layers to exit from the filtration housing. This has the advantage that it reduces the number of apertures defined in the filtration housing and thus reduces the risk of leaking of any effluent and/or air from the system. In the previously described embodiment air flows from a top of the filtration housing across a filter layer and down through the filter layers and/or enters the filtration housing adjacent a filter layer, across the filter layer to exit from the filtration housing.

Preferably the substrate material of the biological filtration means of the at least first filter layer can also include any or any combination of peat, soil, organic matter, coir (waste coconut matter), synthetic soil, rockwool, fibre or mineral wool, volcanic ash, charcoal, and/or naturally occurring media (such as for example, volcanic ash, charcoal), in combination with one or more organisms, such as for example, beetles, termites, ants, fungi, microbes, bacteria (such as for example pseudomonas, corynebacterium and/or the like), other multi-cellular organisms and/or the like which are capable of feeding off, reproducing in and/or breaking down the waste water, sewage and/or effluent passing over or through the filter layer. The substrate material is provided to allow the worms, organisms and/or the like to break the same down to form humus. The organisms break down both the substrate material and the solids contained in the waste water, sewage and/or effluent.

The improved air flow created by the chimney effect in the present invention, in combination with the at least first and second filter layers, creates an improved aerobic environment for use by the organisms provided on the at least first filter layer of the apparatus and an improved aerobic environment for bacteria contained in the at least second filter layer.

Different densities of substrate material can be used in the biological filtration means and/or the material of the at least second filter layer so as to prevent even compaction of the material which could be result in an air and/or water impermeable being formed in the filter layer. The material contained the at least first filter layer is preferably of a different density to the material contained in the at least second filter layer.

In using worms as part of the biological filtration means in the at least first filter layer, this has the advantage that it maintains the humus in a spongy state as a result of the worms moving through the same. This in turn increases the surface area of the biological filtration means and facilitates the diffusion of oxygen from the air into the humus.

In one embodiment the peat used as the substrate material in the at least first layer is coco peat.

Preferably the substrate material of the biological filtration means of the at least first filter layer is provided in one or more permeable containers and/or bags to allow containment of the same and to increase the ease with which the apparatus can be constructed. Further preferably the container and/or bags are water and/or air permeable. The bags or containers can be arranged to form the at least first filter layer of the housing.

In a preferred embodiment the one or more containers and/or bags are mesh bags.

The containers and/or mesh bags are typically arranged to form a single layer on said filter layer.

The provision of the different first and second filter layer sets allows different influents and/or different stages of the treated fluid in the apparatus to be treated efficiently and effectively. For example, when the apparatus is being used to treat influent containing a large amount of solid matter or a greater ratio of solid matter to liquid matter, such as toilet waste, garden waste, animal waste and/or the like, the at least first "humus" filter layer containing any or any combination of worms, beetles, bacteria and/or the like is able to feed off and break down the solid matter. The partially treated fluid passing from the at least first filter layer to the at least second filter layer has significantly reduced levels of or no solid matter. As such, the at least second filter layer containing absorbent material and bacteria provides a finer level of filtration to further treat the fluid. Once fluid has passed through the at least second filter layer, the treated fluid is ready to be released into the environment. The apparatus will work equally well when the apparatus is being used to treat influent containing a large amount of liquid matter or a greater ratio of liquid matter to solid matter, such as septic effluent, grey water and/or the like. The at least first filter layer still provides a first coarse filter means and the at least second filter layer provides a more refined filter means.

Since very little solid matter passes to the at least second filter layers, it is preferred to use bacteria in combination with an absorbent since there is less solid matter for large multi-cellular organisms, such as worms to live off.

Preferably the at least first filter layer and/or the at least second filter layer further includes one or more filters or membranes which are porous to fluid. For example each filter or membrane can include one or more, and preferably a plurality, of pores to allow the passage of fluid therethrough. The biological filtration means and/or filtering material is preferably located on an upper surface of said filter membrane and remains substantially on said upper surface during filtering.

The one or more filters or membranes in the apparatus could be substantially planar or flat in form or could include one or more corrugated or uneven surfaces. The corrugations or unevenness of the surface may prevent a water and/or air impermeable layer being formed as a result of even compaction over the surface of the filter layer.

Preferably the at least first and second filter layers include at least two filters or membranes arranged in a stack or at least partially on top of each other. The upper or at least first filter or membrane typically comprises one or more or a plurality of pores which are smaller in dimension than one or more or a plurality of pores defined in a lower or at least second filter or membrane or vice versa.

Preferably the upper most or at least first filter or membrane is substantially flexible. In one example the upper most or at least first filter or member can include geotextile material, fine pore mesh and/or the like.

Preferably the lower or at least second filter or membrane is substantially rigid. This provides the filter structure with rigidity and strength. In one example the lower or at least second filter or membrane can include a large pore mesh and/or the like.

Any number of filters or membranes can be provided in the housing and/or in said at least first and second filter layers and said filters or membranes can be any or any combination of substantially rigid or flexible.

In one embodiment the apparatus the at least first and second filter layers are provided in a spaced apart orientation in the housing in a vertically or upwardly arranged stack or overlapping configuration.

Preferably the at least first filter layer or each filter layer is provided in a substantial horizontal and/or planar orientation within the housing. The plurality of spaced apart filter layers are preferably arranged substantially vertically within the housing.

Where a plurality of first filter layers are provided in the apparatus, one or more channels, walkways or connection means can be defined between adjacent filter layers to allow organisms contained on one first layer to move to another first filter layer if required (i.e. to move vertically within the housing). For example, in the winter or colder months of the year, the organisms may prefer to be lower in the apparatus housing where it is warmer and so a walkway or channel is provided for them to be able to move easily between the layers. The one or more channels, walkways or connection means are preferably provided at a suitable acute angle to the horizontal or vertical to allow the organisms to move up and down the same with ease.

Preferably a distinct air gap is provided above and/or below each filter layer, thereby allowing for the flow of air over and/or under said filter layer and to provide aeration of said biological filtration means. The air gap or gaps can be any suitable size and is preferably pre-defined.

The air gap can be arranged so as to allow a substantially unobstructed flow of air therethrough (i.e. an open void). Alternatively, the air gap can be arranged to allow restricted air flow therethrough.

Preferably the air inlet and air outlet means of the air flow means and/or intermediate air flow means are provided in the air gap.

In one embodiment the air gap is at least partially filled with media. This restricts air flow across the upper surface of the filter layer and forces air flow through the filter layer. The media can include the matter or material forming at least part of the first and second filter layer(s).

Fluid inlet means are preferably provided in the filtration housing for allowing waste water, sewage and/or effluent to enter the filtration apparatus. Preferably the fluid inlet means are provided above the at least first filter layer or upper most filter layer. The waste water, sewage and/or effluent therefore falls or flows onto the at least first filter layer or upper filter later and the fluid passes through the filter layer whereas substantially most solids contained within the fluid remain on the filter layer.

In one embodiment spreading means are associated with the fluid inlet means, the first filter layer and/or is arranged above the first filter layer to allow spreading of the fluid and/or solids, thereby providing a more even distribution on the first filter layer. For example, the spreading means can include a dome shaped member over which the fluid/solids flows prior to flowing onto the first filter layer.

Fluid outlet means are provided in the filtration housing for allowing treated water and fluid to exit the filtration apparatus. Preferably the fluid outlet means are provided below said at least second filter layer or lowermost filter layer and further preferably are provided at or adjacent a base of the filtration housing.

Depending on the terrain and environment in which the filtration apparatus is located in use, the treated fluid exiting the fluid outlet means could drain directly by gravity into the ground or water course. Alternatively, pump means can be provided to pump the treated fluid to a pre-determined location remote or a spaced distance apart from the fluid outlet means before release into the ground and/or water course. The pump means can be provided in the filtration housing or external to the filtration housing.

Preferably the housing includes support means for supporting the one or more filter layers therein. The support means can include any conventional type of filter support, such as one or more brackets, frame members and/or the like. The support means can be substantially vertically spaced in the housing in one embodiment.

According to a second aspect of the present invention there is provided a method of using a filtration apparatus for the treatment of waste water, sewage and/or effluent, said method including the steps of passing waste water, sewage and/or effluent over and/or through at least a first filter layer provided in said apparatus, said at least first filter layer comprising biological filtration means including one or more organisms and a substrate material to filter the waste water, sewage and/or effluent, located thereon, passing thereover or therethrough in use, said apparatus including at least a second filter layer for filtering fluid that has passed through the at least first filter layer, said second lower filter layer including an absorbent material that is different to the substrate material of the at least first filter layer, characterised in that the housing also includes air inlet means and air outlet means to allow the flow of air through said apparatus in use, the air inlet means and air outlet means each including at least one upright channel or pipe having at least a first opening defined therein to allow atmospheric air to enter or exit the channel or pipe and at least a second opening defined therein to allow said atmospheric air to flow into the filtration housing or allow air to flow out of said filtration housing respectively, said air inlet means and said air outlet means arranged a spaced distance apart in the apparatus to provide a chimney effect, the substrate material of the at least first filter layer is an organic material and includes humus and one or more worms, and the fluid absorbent material of the at least second filter layer is an inorganic material with substantially no humus or worms.

There is further described a method of constructing filtration apparatus. The filtration apparatus preferably comprises a housing having at least a base and side walls. The housing could include an opening in the top and/or side walls to allow assembly of the filter layers therein. The one or more filter layers are arranged in the interior of the housing and a cover is provided over the opening of said housing. The filter layers are typically assembled in the housing via the top of the housing but could be assembled via a side wall of the housing.

There is further described biological filtration apparatus.

Thus, described is a filtration system comprising at least two, and preferably a number, of discrete filtration layers within the apparatus, a first layer for the support of humus or organic matter thereon and a second layer for the support of an absorbent material thereon. These filter layers can be provided alone or in combination with a continuous and efficient air ventilation system.

Embodiments of the present invention will now be described with reference to the accompanying figures, wherein
Figure 1a is a simplified cross sectional view taken through filtration apparatus according to an embodiment of the present invention;
Figure 1b is a detailed view of a filter layer within the filtration apparatus shown in figure 1a;
Figures 2a-2b show simplified cross sectional views taken through filtration apparatus according to a further embodiment of the present invention using a gravity based outlet and a pumped outlet respectively.

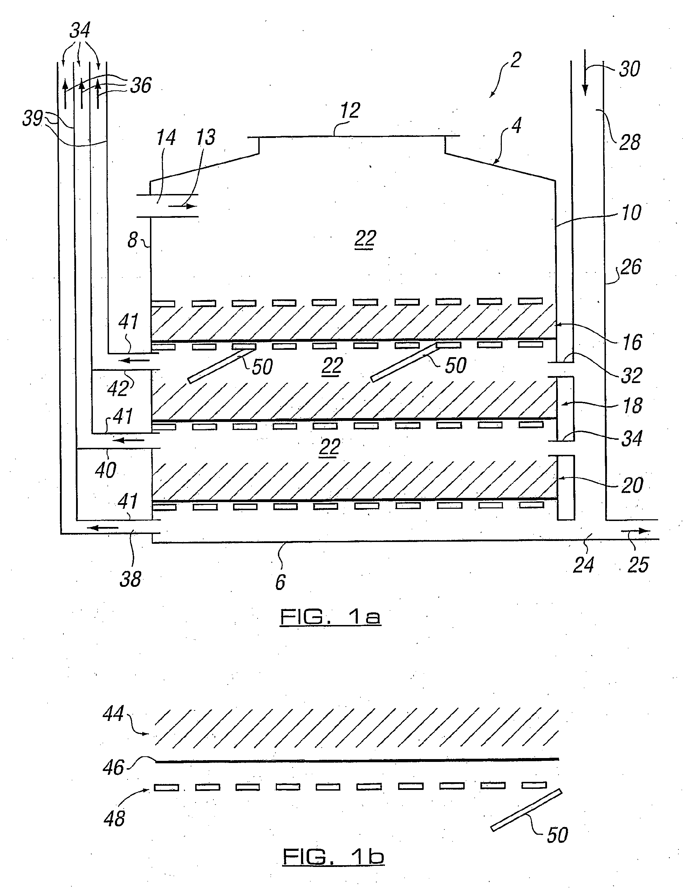

Referring to figures 1a-1b, there is illustrated a biological filtration system 2 which allows the filtration and treatment of sewage (or effluent) and waste water substantially entirely by biological, natural means. The filtration system of the present invention is characterised by the inclusion of at least two different filter layers that perform different functions within the apparatus. These two filter layers allow solid and liquid matter to be treated separately, simultaneously and independently.

System 2 includes filtration housing 4 having a base 6, side walls 8, 10 and a top 12. In use, the filtration housing is typically located in a hole in the ground so that the top 12 is adjacent or above ground level. By locating the housing in the ground, this protects the same from the cold, adverse weather conditions and damage.

A sewage inlet pipe 14 is provided adjacent the top 12 of the housing to allow sewage to enter the apparatus, as shown by arrow 13. Three filter layers 16, 18, 20 are provided in a vertical stacked arrangement within the housing. Each filter layer is provided a spaced distance apart so that an air gap 22 is defined above each filter layer. A treated sewage outlet pipe 24 is provided adjacent the base 6 of the housing to allow treated sewage or fluid to exit the housing having passed through the three filter layers 16, 18, 20, as shown by arrow 25. The treated water may need to be pumped out using pump means if required but treated water could be arranged simply to flow from the system if the terrain and environment allows for the same in a safe and hygienic manner.

Air inlet means and air outlet means are provided with the filtration apparatus and are arranged to provide a chimney effect. It is to be noted that the air inlet means and/or air outlet means could be provided in the housing itself, adjacent the exterior of the housing or a spaced distance therefrom.

More particularly, the air inlet means comprises an air inlet pipe 26 arranged substantially vertically adjacent the exterior of the housing 4. Air inlet pipe 26 has a first opening 28 for allowing ambient air to pass from the exterior of the housing into the interior of the housing, as shown by arrow 30. Further air inlet openings 32, 34 are provided in said pipe 26 above each filter layer 18, 20 so that air can flow from pipe 26 over the surface of said filter layers and within air gap 22 above said filter layer. It is not essential to have a separate inlet opening above uppermost filter layer 16 since air can enter the apparatus via sewage inlet 14. However, an inlet opening can be provided if required. The air becomes less aerated the lower through the system the treated fluid passes and therefore the additional and independent ventilation openings 32, 34 are required for the lower filter layers compared to the upper filter layer so the aerobic microbes and organisms can survive. By maintaining a well aerated filtration system, this prevents blockage of the system as a result of inadequate breakdown of sewage due to anaerobic conditions being created.

The air outlet means comprises three separate air outlet pipes 38, 40, 42 having a first portion 39 arranged substantially vertically adjacent the exterior of the housing 4. Air outlet pipes 38, 40, 42 each have a first opening 34 for allowing air from the housing interior to exit the housing, as shown by arrow 36. Air outlet pipes 42, 40, 38 each have a second substantially transverse portion and opening 41 provided above filter layers 20, 18 and below filter layer 20 respectively (i.e. there are air inlet and outlet openings sandwiched between.each filter layer of the apparatus).

Each filter layer 16, 18, 20 is arranged substantially horizontally within the housing and the filter layers 16, 18, 20 are arranged in a substantially vertical stack a spaced distance apart from each other.

Filter layers 16, 18 form a first set of filter layers and comprise biological filter means 44 arranged on an upper surface thereof. The biological filter means comprises an organic substrate material, such as peat and humus, together with organisms, such as microbes, bacteria, worms and/or the like which feed on and reproduce in the peat to break the same down to form humus. The organic matter is typically contained within mesh bags to maintain the same on top of each filter layer and to prevent the same from passing through the apparatus. The mesh bags are located on top of an intermediate membrane layer 46 which can be formed from geotextile material or fine pore mesh in one example. Intermediate membrane layer 46 is located on a lower membrane layer 48 which can be formed from a substantially rigid large pore mesh.

The population of worms, bacteria and multi-cellular organisms is typically greatest on the top filter layer 16 as this is where sewage first flows when entering the apparatus. The worms and multi-cellular organisms living in the peat in this layer break down and feed off the sewage. Most of the sewage solids will be retained by the upper filter layer, although some of the finer sewage solids which are of smaller dimensions than the pore dimensions of membranes 46, 48 may flow through the pores in the upper filter layer 16 and may pass through to the intermediate filter layer 18. Waste water passes through the biological filter means and the membranes 46, 48 and falls onto filter layers 18 and then 20.

A similar process takes place on filter layer 18 as on top filter layer 16 but there is no or very little requirement to break down any sewage solids. As liquid passes through each filter layer it is cleaned to a higher standard such that fluid passing through the lower filter layer 20 is typically substantially clear of the sewage solids and is sufficiently clean and treated to be released in the surrounding environment as normal run-off water.

Filter layer 20 forms a second set of filter layers which is different to the first filter layers 16, 18. In particular, filter layer 20 comprises an absorbent foamed material in place of the substrate material 44 of the upper filter layers. The absorbent material is inherently absorbent and can absorb at least 20% of its weight in water. This allows perculation of treated water through the filter layer in a pre-defined time scale. Bacteria may be present in the absorbent layer and the air flow system of the invention helps to ensure that sufficiently aerobic conditions are maintained for the bacteria. The absorbent material is a refined filter means and filters predominantly liquid passing onto the same from an upper filter layer.

It is optional in the second filter layer whether membranes 46, 48 are provided.

In one embodiment charcoal, activated charcoal and/or the like could be included in the apparatus or associated with the apparatus to further filter and/or treat the water prior to release from the apparatus.

An angled channel 50 can be provided between the first set of filter layers to allow worms and other organisms to move between the layers in use.

It will be appreciated that the membrane pores are of such dimensions to allow timed passage of the sewage through the apparatus, thereby giving sufficient time for the worms to breakdown any organic material contained in the same and to allow separation of the water from the solid waste.

The second filter layer set 20 is substantially free of the substrate material (i.e. peat/compost) and worms.

It will be appreciated that the first and second filter layer sets can include any number of filter layers therein as required.

The apparatus housing can be formed from any suitable material, such as metal, wood, plastic and/or the like, and can be provided in any suitable size, shape and/or design. In addition, more than or less than three filter layers can be provided in the apparatus depending on the volume of sewage being processed in.the apparatus.

The improved air flow across the filter layers provided by the present invention increases the aerobic conditions for the organisms living on and/or forming part of the filter layers.

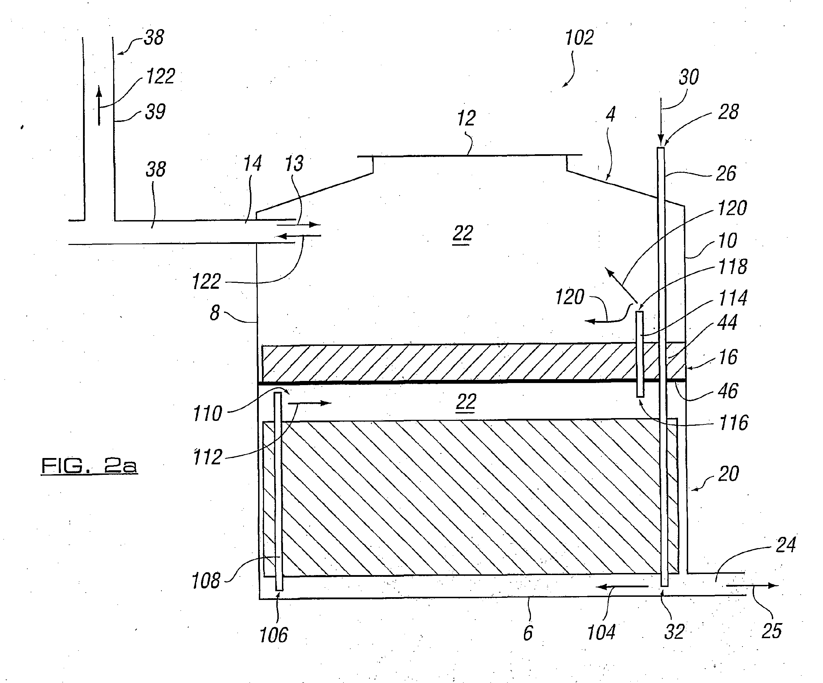

Referring to figures 2a-2b, there is illustrated a further embodiment of the filtration apparatus 102 of the present invention in which air entering the apparatus is initially directed to the base 6 of the housing 4 and is then allowed to flow upwardly through the filter housing, compared to the first described embodiment where air flowed in a direction predominantly downwardly through the filter housing and/or transversally of the filter housing. In addition, only a single first filter layer is provided and a single second filter layer is provided below. The same reference numerals have been used to describe the same features in figures 2a-2b and figures 1a-1b.

In order to allow air to flow from the base 6 of the housing in an upwardly direction, further air inlet opening 32 is located adjacent base 6 below lowest second filter layer 20. An air gap 22 is provided below filter layer 20. Air flows below filter layer 20, as shown by arrow 104 and is drawn into an air inlet opening 106 at the base of intermediate air flow pipe 108.

Intermediate air flow pipe 108 is arranged substantially vertically and passes through lower filter layer 20. An air outlet opening 110 is defined adjacent the top of intermediate air flow pipe 108 and allows air to flow up through air flow pipe 108 to the air gap 22 above filter layer 20. Air then flows across the upper surface of filter layer 20, as shown by arrow 112 to a further intermediate air flow pipe 114.

Further intermediate air flow pipe 114 has an air inlet 116 located adjacent a base thereof in air gap 22 between filter layers 16 and 20, and an air outlet 118 located in the air gap 22 above upper filter layer 16. Air exits outlet 118 and can flow across the upper surface of filter layer 16, as shown by arrows 120, prior to exiting via sewer inlet pipe 14, which communicates with air outlet pipe 38, as shown by arrows 122.

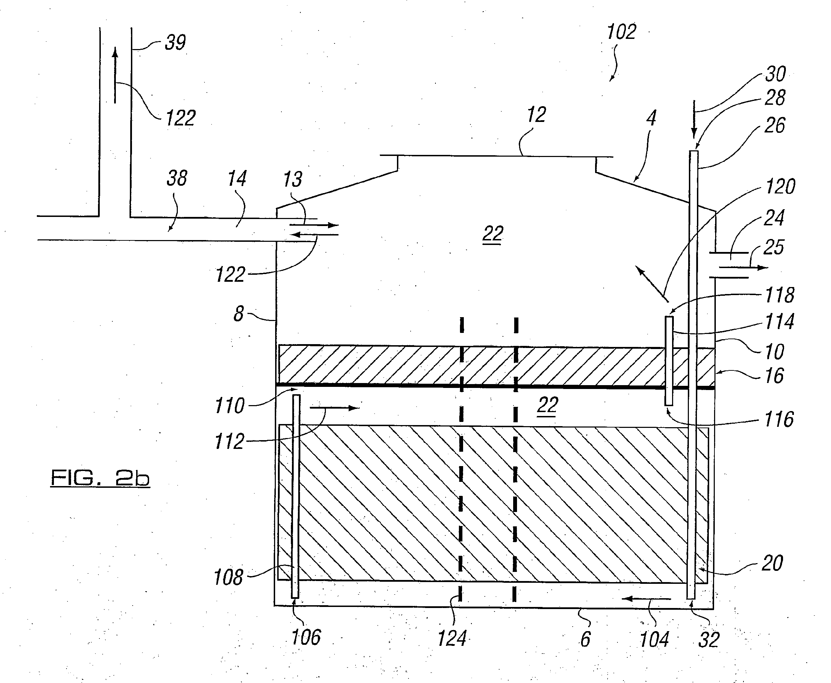

The arrangement shown in figure 2a allows treated influent fluid flowing downwardly through the filter housing to pass out of outlet pipe 24 adjacent base 6 using gravitational forces. The arrangement shown in figure 2b allows treated influent fluid flowing downwardly through the filter housing to pass out of outlet pipe 24 arranged above the upper first filter layer 16 using a pump 124 to pump the treated fluid from base 6 to outlet 24.

It will be appreciated that the intermediate air flow pipes, air inlet and/or air outlet pipes can be arranged to allow air to flow through the filter layers as well as above and below the filter layers.

The material forming the second filter layer is shown to be of a greater depth than the material forming the first filter layer in figures 2a and 2b. However, it will be appreciated that the depth of material in the first and second filter layers can be the same or different.

In a preferred arrangement the substrate material of the first filter layer is coir, humus with worms and the absorbent material of the second filter layer is an open celled foam material, such as Fytocell®.

The intermediate air flow pipes are preferably arranged on opposite sides of the filter housing to each other and/or the air inlet/outlet pipes associated with a particular filter layer to ensure air flows across or through substantially the entire width of the filter layer prior to moving to a different filter layer or exiting the filter housing.

## Claims

1. Filtration apparatus (2, 102) for the treatment of waste water, sewage and/or effluent, said apparatus including a housing (4) having at least a first filter layer (16) provided therein, said first filter layer (16) comprising biological filtration means including one or more organisms and a substrate material to filter waste water, sewage and/or effluent located thereon, passing thereover or therethrough in use, said apparatus including at least a second filter layer (18, 20) for filtering fluid that has passed through the at least first filter layer (16), said second filter layer (18, 20) includes a fluid absorbent material that is different to the substrate material of the at least first filter layer (16), **characterised in that** the housing also includes air inlet means and air outlet means to allow the flow of air through said apparatus in use, the air inlet means and air outlet means each including at least one upright channel or pipe (26, 38, 40, 42) having at least a first opening (28, 34) defined therein to allow atmospheric air to enter or exit the channel or pipe and at least a second opening defined therein to allow said atmospheric air to flow into the filtration housing or allow air to flow out of said filtration housing respectively, said air inlet means and said air outlet means arranged a spaced distance apart in the apparatus to provide a chimney effect, the substrate material of the at least first filter layer (16) is an organic material and includes humus and one or more worms, and the fluid absorbent material of the at least second filter layer (18, 20) is an inorganic material with substantially no humus or worms.

2. Filtration apparatus according to claim 1 wherein the fluid absorbent material is a foamed material or a fibre product.

3. Filtration apparatus according to claim 1 wherein the flow of air through said apparatus (2, 102) is solely dependent on natural and/or biological processes without powered air flow.

4. Filtration apparatus according to claim 1 wherein the second and further openings are defined adjacent or above each filter layer or two or more of said filter layers, or are arranged a spaced distance apart along a longitudinal axis of the air inlet pipe (26) or channel and a spaced distance apart from the first air opening (28, 34).

5. Filtration apparatus according to claim 1 wherein a plurality of filter layers (16, 18, 20) are provided in the said housing (4) and the air inlet means and/or air outlet means includes at least one upright air inlet channel or pipe (26, 38, 40, 42) provided in association with each of said filter layers or two or more of said filter layers.

6. Filtration apparatus according to claim 1 wherein the substrate material of the at least first filter layer (16) further includes any or any combination of peat, coco peat, coir, synthetic soil, soil, mineral fibre or wool, volcanic ash, charcoal beetles, termites, ants, fungi, microbes, bacteria which are capable of feeding off, reproducing in and/or breaking down the waste water, sewage and/or effluent passing over or through the filter layer.

7. Filtration apparatus according to claim 1 wherein the biological filtration means and/or substrate material are provided in one or more water and/or fluid permeable containers, mesh bags and/or bags.

8. Filtration apparatus according to claim 1 wherein the at least first filter layer (16) or a filter layer (16, 18, 20) includes one or more filters or membranes (46, 48) having one or more pores defined therein to allow the passage of fluid therethrough.

9. Filtration apparatus according to claim 1 wherein a distinct air gap (22) is provided between the at least first and second filter layers (16, 18).

10. Filtration apparatus according to claim 1 wherein fluid inlet means (14) are provided in the filtration housing (4) for allowing waste water, sewage and/or effluent to enter said housing, said fluid inlet means (14) arranged above the at least first filter layer (16) in the housing, and fluid outlet means (24) provided in the filtration housing (4) for allowing treated water and fluid to exit the housing.

11. Filtration apparatus according to claim 1 wherein intermediate air flow means (114) are provided to allow air flow between adjacent filter layers (16, 18, 20), said intermediate air flow means (114) comprising upright or substantially vertically arranged pipes or channels having air inlet means (116) below a filter layer and air outlet means (118) above said filter layer.

12. Filtration apparatus according to claim 11 wherein the air inlet means (116) of the intermediate air flow means (114) are provided a spaced distance apart or opposite to the air outlet means (118) of further intermediate air flow means (114) associated with a particular filter layer (16, 18, 20) or the second opening to the main air inlet means (26) of the apparatus.

13. Filtration apparatus according to claim 1 wherein the at least second air inlet opening provided in said air inlet means (26) is arranged at or adjacent a base in the interior of the housing of the apparatus.

14. A method of using a filtration apparatus (2, 102) for the treatment of waste water, sewage and/or effluent, said method including the steps of passing waste water, sewage and/or effluent over and/or through at least a first filter layer (16) provided in said apparatus, said at least first filter layer (16) comprising biological filtration means including one or more organisms and a substrate material to filter the waste water, sewage and/or effluent, located thereon, passing thereover or therethrough in use, said apparatus including at least a second filter layer (18, 20) for filtering fluid that has passed through the at least first filter layer (16), said second lower filter layer (18, 20) including an absorbent material that is different to the substrate material of the at least first filter layer (16), **characterised in that** the housing (4) also includes air inlet means and air outlet means to allow the flow of air through said apparatus in use, the air inlet means and air outlet means each including at least one upright channel or pipe (26, 38, 40, 42) having at least a first opening (28, 34) defined therein to allow atmospheric air to enter or exit the channel or pipe and at least a second opening defined therein to allow said atmospheric air to flow into the filtration housing or allow air to flow out of said filtration housing respectively, said air inlet means and said air outlet means arranged a spaced distance apart in the apparatus to provide a chimney effect, the substrate material of the at least first filter layer (16) is an organic material and includes humus and one or more worms, and the fluid absorbent material of the at least second filter layer (18, 20) is an inorganic material with substantially no humus or worms.

## Patentansprüche

1. Filtrationseinheit (2, 102) zur Behandlung von häuslichem, kommunalem und/oder industriellem Abwasser. Die genannte Einheit beinhaltet ein Gehäuse (4), welches mit wenigstens einer ersten Filterschicht (16) ausgestattet ist. In Benutzung umfasst die genannte erste Filterschicht (16) eine biologische Filtration und beinhaltet Substrat und eine oder mehrere Organismen, welche sich in, über oder unter der genannten Filterschicht befinden, um häusliches, kommunales und/oder industrielles Abwasser zu filtern. Genannte Einheit beinhaltet wenigstens eine zweite Filterschicht (18, 20), um Flüssigkeiten zu filtern, welche die wenigstens erste Filterschicht (16) passiert haben. Genannte zweite Filterschicht (18, 20) beinhaltet Flüssigkeitsabsorbationsmaterial, das sich von dem Substrat der wenigstens ersten Filterschicht (16) unterscheidet. Charakterisierend ist, dass das Gehäuse Luftein- und Auslassmöglichkeiten besitzt, um einen Luftstrom durch die benutzte Filtrationseinheit zu gewährleisten. Jede der Luftein- und Auslassmöglichkeiten umfasst einen aufrechten Kanal bzw. ein aufrechtes Rohr (26, 38, 40, 42). Diese sind mit mindestens einer ersten Öffnung (28, 34) ausgestattet, um die Umgebungsluft durch das Rohr oder den Kanal hinein und heraus zu lassen und mindestens eine zweite Öffnung, um die genannte Umgebungsluft in bzw. aus dem Gehäuse der genannten Filtrationseinheit strömen zu lassen. Die genannten Lufteinlass -bzw. Luftauslassmöglichkeiten sind in engem Abstand in der Filtrationseinheit angebracht, um einen Abzugseffekt zu gewährleisten. Das Substrat der wenigstens ersten Filterschicht (16) ist ein organisches Material, welches Humus und einen Wurm oder mehrere Würmer aufweist. Das Flüssigkeitsabsorbationsmaterial der wenigstens zweiten Filterschicht (18, 20) besteht aus anorganischem Material und ist weitestgehend ohne Humus und Würmer.

2. Filtrationseinheit gemäß Anspruch 1, in der das Flüssigkeitsabsorbationsmaterial ein aufgeschäumtes Material oder Faserprodukt ist.

3. Filtrationseinheit gemäß Anspruch 1, in der der Luftzug durch die genannte Einheit (2, 102) ohne zusätzliche Antriebshilfe, ausschließlich von natürlichen und/oder biologischen Prozessen abhängt.

4. Filtrationseinheit gemäß Anspruch 1, in der die zweiten und weiteren Luftöffnungen angrenzend oder über jeder Filterschicht bzw. zweien oder mehreren der genannten Filterschichten angebracht sind, oder sie sind in engem Abstand entlang der Längsachse des Lufteinzugsrohres (26) oder Kanals abseits der ersten Luftöffnung (28, 34) angeordnet.

5. Filtrationseinheit gemäß Anspruch 1, mit einer Vielzahl von Filterschichten (16, 18, 20) in dem genannten Gehäuse (4), in dem die Luftein- und Auslassmöglichkeiten, in Verbindung mit jeder oder zweien oder Weiteren der erwähnten Filterschichten, mit mindestens einem aufrechten Lufteinlasskanal oder Rohr (26, 38, 40, 42) ausgestattet sind.

6. Filtrationseinheit gemäß Anspruch 1, in der das Substrat der zumindest ersten Filterschicht (16) folgendes, einzeln oder in Kombinationen, beinhaltet: Torf, Kokustorf, Bast, synthetische Erde, Erde, Mineralfasern oder Wolle, Vulkanasche, Melanophila Consputa, Termiten, Ameisen, Pilze, Mikroben, Bakterien, welche fähig sind sich von dem häuslichen, kommunalen und/oder industriellen Abwasser zu ernähren, sich fortzupflanzen und die Abwasserinhaltsstoffe abzubauen, welches die Filterschicht passiert.

7. Filtrationseinheit gemäß Anspruch 1, in der die biologische Filtrationsmöglichkeiten und/oder das Substrat in einer oder mehreren wasser- und/oder flüssigkeitsdurchlässigen Containern, Taschen und/oder Netztaschen zur Verfügung gestellt werden.

8. Filtrationseinheit gemäß Anspruch 1, in der eine Filterschicht (16, 18, 20) oder zumindest die erste Filterschicht (16) aus einer oder mehreren Filtern oder Membranen bestehen, welche eine oder mehrere Poren besitzen, um die Flüssigkeitsdurchgängigkeit zu gewährleisten.

9. Filtrationseinheit gemäß Anspruch 1, in der ein ausgeprägter Luftspalt zwischen der zumindest ersten und zweiten Filterschicht vorgesehen ist.

10. Filtrationseinheit gemäß Anspruch 1, in dem im genannten Gehäuse Flüssigkeitseintrittsmöglichkeiten vorgesehen sind, um häusliches, kommunales und/oder industrielles Abwasser den Zugang ins Gehäuse zu gewährleisten. Die genannten Flüssigkeitseintrittsmöglichkeiten (14) sind über der wenigstens ersten Filterschicht (16) im Gehäuse angebracht. Ebenso sind Flüssigkeitsaustrittsmöglichkeiten (24) vorgesehen, um das behandelte Wasser und die behandelten Flüssigkeiten aus dem Gehäuse wieder austreten zu lassen.

11. Filtrationseinheit gemäß Anspruch 1, sieht intermittierende Luftströme (114) zwischen angrenzenden Filterschichten (16, 18, 20) vor, was durch aufrechte oder im Wesentlichen vertikal angeordnete Rohre oder Kanäle mit Lufteinlässen (116), welche unter einer Filterschicht und den Luftauslässen (118) angeordnet sind, gewährleistet wird.

12. Filtrationseinheit gemäß Anspruch 11, in der die Lufteinlassmöglichkeiten (116) der intermittierenden Luftströme (114) durch engem Abstand abseits oder gegenüber der Luftauslassmöglichkeiten (118) vorgesehen sind.

13. Filtrationseinheit gemäß Anspruch 1, in der die wenigstens zweite Öffnung des Lufteinlasses, die in genannten Lufteinlassmöglichkeiten (26) vorgesehen ist, innerhalb des Filtrationseinheitsgehäuses auf einem oder angrenzend an einen Boden angeordnet ist.

14. Eine Methode eine solche Filtrationseinheit (2, 102) zu nutzen, ist die Behandlung von häuslichem, kommunalem und/oder industriellem Abwasser. Genannte Methode beinhaltet die Schritte des Durchleitens von häuslichem, kommunalem und/oder industriellem Abwasser über und/oder durch die wenigstens erste Filterschicht (16). In der genannten Filtrationseinheit ist die genannte wenigstens erste Filterschicht vorgesehen, einschließlich biologischen Filtrationsmöglichkeiten, die ein Substrat und eine oder mehrere Organismen enthalten, welche sich an, über oder unter der genannten Filterschicht befinden, um häusliches, kommunales und/oder industrielles Abwasser, zu filtern. Genannte Einheit beinhaltet wenigstens eine zweite Filterschicht (18, 20), um Flüssigkeiten zu filtern, welche die wenigstens erste Filterschicht (16) passiert haben. Genannte zweite Filterschicht (18, 20) beinhaltet Flüssigkeitsabsorbationsmaterial, das sich von dem Substrat der wenigstens ersten Filterschicht (16) unterscheidet. Charakterisierend ist, dass das Gehäuse(4) Luftein- und Auslassmöglichkeiten hat, um einen Luftstrom durch die benutzte Filtrations-einheit zu gewährleisten. Jede der Luftein- und Auslassmöglichkeiten umfasst einen aufrechten Kanal bzw. ein aufrechtes Rohr (26, 38, 40, 42). Diese sind mit mindestens einer ersten Öffnung (28, 34) ausgestattet, um atmosphärische Luft durch das Rohr oder den Kanal hinein und heraus zu lassen und mindestens eine zweite Öffnung, um die genannte atmosphärische Luft in bzw. aus dem Gehäuse der genannten Filtrationseinheit strömen zu lassen. Die genannten Lufteinlass -bzw. Luftauslassmöglichkeit en sind in engem Abstand in der Filtrationseinheit angebracht, um einen Abzugseffekt zu gewährleisten. Das Substrat der wenigstens ersten Filterschicht (16) ist ein organisches Material, welches Humus und einen oder mehrere Würmer aufweist. Das Flüssigkeitsabsorbationsmaterial der wenigstens zweiten Filterschicht (18, 20) besteht aus anorganischem Material und im Wesentlichem aus keinem Humus und keinen Würmern.

## Revendications

1. Appareil de filtration (2, 102) pour le traitement des eaux usées, des eaux d'égout et/ou des effluents, ledit appareil comprenant un boitier (4) contenant au minimum une première couche filtrante (16) incluse, ladite première couche filtrante (16) étant composée d'un moyen de filtration biologique comprenant un ou plusieurs organismes et un matériau de substrat pour filtrer les eaux usées, eaux d'égout et/ou effluents s'y trouvant et passant par-dessus ou à travers lors de l'utilisation, ledit appareil comprenant au minimum une deuxième couche filtrante (18, 20) pour filtrer le fluide qui passe par au minimum la première couche filtrante (16), ladite seconde couche filtrante (18, 20) comprenant un matériau d'absorption de fluide qui est différent du matériau de substrat d'au minimum la première couche filtrante (16), **caractérisée en ce que** le boitier comprend également un moyen d'entrée d'air et un moyen de sortie d'air afin de permettre le passage de l'air dans ledit appareil lors de son utilisation, lesdits moyen d'entrée d'air et moyen de sortie d'air comprenant chacun au minimum un canal ou tuyau vertical (26, 38, 40, 42) ayant au minimum une première ouverture (28, 34) définie ici pour permettre à l'air atmosphérique d'entrer ou de sortir du canal ou tuyau et au minimum une seconde ouverture définie ici pour permettre audit air atmosphérique de circuler dans le boitier de filtration ou de permettre audit air atmosphérique de sortir dudit boitier de filtration respectivement, lesdits moyen d'entrée d'air et moyen de sortie d'air disposés selon une certaine distance d'espacement dans l'appareil afin de provoquer un effet de cheminée, le matériau de substrat d'au minimum la première couche filtrante (16) est un matériau organique qui comprend de l'humus et un ou plusieurs vers, et le matériau d'absorption de fluide d'au minimum la deuxième couche filtrante (18, 20) est un matériau inorganique avec substantiellement aucun humus ou vers.

2. Appareil de filtration selon la revendication 1 dans lequel le matériau d'absorption de fluide est un matériau en mousse ou un produit fibreux.

3. Appareil de filtration selon la revendication 1 dans lequel le flux d'air circulant dans ledit appareil (2, 102) dépend uniquement de procédés naturels ou biologiques sans flux d'air actionné par un moteur.

4. Appareil de filtration selon la revendication 1 dans lequel la deuxième ouverture ainsi que les suivantes sont définies comme adjacentes ou au-dessus de chaque couche filtrante ou de deux ou plus desdites couches filtrantes, ou bien sont disposées selon une certaine distance d'espacement et sur un axe longitudinal le long du tuyau (26) ou du canal d'entrée d'air et à une distance d'espacement de la première ouverture d'air (28, 34).

5. Appareil de filtration selon la revendication 1 dans lequel une pluralité de couches filtrantes (16, 18, 20) sont placées dans ledit boitier (4) et le moyen d'entrée d'air et/ou le moyen de sortie d'air comprennent au minimum un canal ou tuyau vertical d'entrée d'air (26, 38, 40, 42) placé en concomitance avec chacune desdites couches filtrantes ou bien deux ou plus desdites couches filtrantes.

6. Appareil de filtration selon la revendication 1 dans lequel le matériau de substrat d'au moins la première couche filtrante (16) comprend en outre les éléments ou combinaisons d'éléments suivants : tourbe, tourbe de coco, fibre de coco, terre synthétique, terre, fibre minérale ou laine, cendre volcanique, bupreste pyromètre, termites, fourmis, champignons, microbes, bactéries qui sont capables de s'alimenter, de se reproduire et/ou de décomposer les eaux usées, eaux d'égout et/ou effluents passant au-dessus ou à travers la couche filtrante.

7. Appareil de filtration selon la revendication 1 dans lequel les moyens de filtration biologique et/ou le matériau de substrat sont placés dans un ou plusieurs containers, sacs à mailles ou sacs perméables à l'eau ou à tout fluide.

8. Appareil de filtration selon la revendication 1 dans lequel au minimum la première couche filtrante (16) ou une couche filtrante (16, 18, 20) comprend une ou
plusieurs couches ou membranes (46, 48) ayant une ou plusieurs pores conçues ici pour permettre au fluide de passer au travers de ladite pore.

9. Appareil de filtration selon la revendication 1 dans lequel une lame d'air distincte (22) est placée entre au minimum les première et deuxième couches filtrantes (16,18).

10. Appareil de filtration selon la revendication 1 dans lequel les moyens d'entrée de fluide (14) sont placés dans le boitier de filtration (4) afin de permettre aux eaux usées, eaux d'égout et/ou effluents d'entrer dans ledit boitier, lesdits moyens d'entrée de fluide (14) placés au-dessus d'au minimum la première couche filtrante (16) dans le boitier, et les moyens de sortie de fluide (24) placés dans le boitier de filtration (4) afin de permettre aux eaux traitées et au fluide de sortir du boitier.

11. Appareil de filtration selon la revendication 1 dans lequel les moyens de flux d'air intermédiaires (114) sont conçus afin de permettre un flux d'air entre les couches filtrantes adjacentes (16, 18, 20), lesdits moyens de flux air intermédiaires (114) comprenant des tuyaux ou canaux verticaux ou arrangés de manière sensiblement verticale et possédant des moyens d'entrée d'air (116) en dessous d'une couche filtrante et des moyens de sortie d'air (118) au-dessus de ladite couche filtrante.

12. Appareil de filtration selon la revendication 1 dans lequel les moyens d'entrée d'air (116) des moyens de flux d'air intermédiaires (114) sont placés selon une certaine distance d'espacement ou opposés aux moyens de sortie d'air (118) d'autres moyens de flux d'air intermédiaires (114) et associés à une couche filtrante particulière (16, 18, 20) ou à la seconde ouverture des principaux moyens d'entrée d'air (26) de l'appareil.

13. Appareil de filtration selon la revendication 1 dans lequel au minimum la seconde ouverture d'entrée d'air prévue dans lesdits moyens d'entrée d'air (26) est placée à la base ou adjacente à la base à l'intérieur du boitier de l'appareil.

14. Une méthode d'utilisation de l'appareil de filtration (2, 102) pour le traitement des eaux usées, eaux d'égout et/ou effluents, ladite méthode comprenant les étapes de passage des eaux usées, eaux d'égout et/ou effluents au-dessus de et/ou au travers d'au minimum une première couche filtrante (16) prévue dans ledit appareil, ladite première couche filtrante au minimum (16) comprenant des moyens de filtration biologique comportant un ou plusieurs organismes et un matériau de substrat pour filtrer les eaux usées, eaux d'égout et/ou effluents s'y trouvant et passant au-dessus ou au travers de ladite couche lors de l'utilisation, ledit appareil comprenant au minimum une deuxième couche filtrante (18, 20) pour la filtration de fluide qui passe à travers la première couche filtrante au minimum (16), ladite seconde couche filtrante inférieure (18, 20) comprenant un matériau absorbant qui est différent du matériau de substrat d'au minimum la première couche filtrante (16), **caractérisée en ce que** le boitier (4) comprend également des moyens d'entrée d'air et des moyens de sortie d'air afin de permettre le flux d'air à l'intérieur dudit appareil lors de son utilisation, lesdits moyens d'entrée d'air et moyens de sortie d'air comprenant au minimum un canal ou tuyau vertical (26, 38, 40, 42) possédant au minimum une première ouverture (28, 34) définie ici afin de permettre à l'air atmosphérique d'entrer ou de sortir du canal ou du tuyau et au moins une deuxième ouverture définie ici afin de permettre ledit air atmosphérique de circuler dans le boitier de filtration ou bien de permettre à l'air de sortir dudit boitier de filtration respectivement, lesdits moyens d'entrée d'air et moyens de sortie d'air placés à une distance d'espacement dans l'appareil afin de permettre un effet de cheminée, le matériau de substrat d'au minimum la première couche filtrante (16) est un matériau organique et comprend de l'humus et un ou plusieurs vers, et le matériau d'absorption de fluide d'au minimum la deuxième couche filtrante (18, 20) est un matériau inorganique avec substantiellement pas d'humus ou de vers.
